# EUROPÄISCHE PATENTSCHRIFT

(11) **EP 3 371 792 B1**
(45) Veröffentlichungstag und Bekanntmachung des Hinweises auf die Patenterteilung: **19.06.2019**
(21) Anmeldenummer: 17701436.2
(22) Anmeldetag: 16.01.2017
(51) Int. Cl.: G07B 15/02, G08G 1/01, B60W 40/10, G06F 3/00, G06K 9/00, G08G 1/0967, G08G 1/14, G07C 5/00, G07C 5/02

(54) **VERFAHREN ZUM BETREIBEN EINER DETEKTIONSVORRICHTUNG EINES KRAFTFAHRZEUGS**
METHOD FOR OPERATING A DETECTION DEVICE OF A MOTOR VEHICLE
PROCÉDÉ POUR FAIRE FONCTIONNER UN DISPOSITIF DE DÉTECTION D'UN VÉHICULE À MOTEUR

(30) Priorität: 29.01.2016 DE 102016000970
(43) Veröffentlichungstag der Anmeldung: 12.09.2018
(73) Patentinhaber: Audi AG, 85045 Ingolstadt (DE)
(72) Erfinder: SOFRA, Nikoletta, 85049 Ingolstadt (DE)
(86) Internationale Anmeldenummer: PCT/EP2017/050750
(87) Internationale Veröffentlichungsnummer: WO 2017/129428

(56) Entgegenhaltungen:
- DE-A1-102012 201 472
- DE-A1-102013 212 235
- DE-A1-102014 212 336
- US-A1- 2010 052 946
- US-A1- 2015 213 715

## Beschreibung

Die Erfindung betrifft eine Detektionsvorrichtung für ein Kraftfahrzeug sowie ein Betriebsverfahren für die Detektionsvorrichtung. Die Detektionsvorrichtung detektiert, ob sich ein Fahrer noch auf dem Weg zu einem Reiseziel befindet oder ob er das Reiseziel bereits erreicht hat, aber noch auf der Suche nach einer Parkgelegenheit für das Kraftfahrzeug ist.

Hierzu ist aus der US 2010/0052946 A1 bekannt, dass man den Suchvorgang mittels einer zentralen Servervorrichtung im Nachhinein erkennen kann, indem in regelmäßigen Abständen aus dem Kraftfahrzeug Positionsdaten und ein zugehöriger Zeitstempel empfangen werden. Anhand dieser Daten wird durch die Servervorrichtung in einer digitalen Karte die Fahrroute des Kraftfahrzeugs nachvollzogen und daran erkannt, ob sich das Kraftfahrzeug zielstrebig auf ein Navigationsziel zu bewegt oder der Fahrer eine Suche nach einer Parkgelegenheit durchgeführt hat. Aus so erkannten Suchphasen mehrerer Kraftfahrzeuge kann eine mittlere Suchzeit ermittelt werden.

Nachteilig bei dieser Lösung ist, dass eine breitbandige Funkverbindung nötig ist, um die Positionsdaten in der Servervorrichtung bereitzustellen. Reißt die Funkverbindung ab, so fehlen Informationen über die Fahrbewegungen des Kraftfahrzeugs, sodass durch die Servervorrichtung das Muster der Fahrbewegung nicht mehr analysiert werden kann. Um mehrere Kraftfahrzeuge beobachten zu können, benötigt die Servervorrichtung zudem eine große Rechenkapazität.

Aus der EP 1 070 635 A2 ist ein Navigationsverfahren bekannt, um einem Fahrer eines Kraftfahrzeugs Navigationshinweise zu einer Parkgelegenheit an einem Navigationsziel bereitzustellen. Hierzu stellt eine Parkmöglichkeitsverwaltung Informationen über verfügbare Parkplätze bereit, aus denen einer in der Nähe des Navigationsziels ausgewählt und das Kraftfahrzeug dorthin navigiert wird. Dieses Verfahren weist den Nachteil auf, dass es nur mit bereits bekannten Parkplätzen funktioniert. Eine Information an den Fahrer dahingehen, wie lang er in einem nicht verwalteten Gebiet voraussichtlich nach einem Parkplatz suchen wird, lässt sich mit diesem Verfahren nicht ermitteln.

Aus der DE 10 2005 027 250 A1 ist ein Verfahren zur automatischen Parkplatzsuche bekannt, das ebenfalls eine vorausschauende Erkennung von Parkplatzmöglichkeiten im Umkreis eines vor Fahrtantritt angegebenen Fahrtziels ermöglicht. Die verfügbaren Stellplätze werden unmittelbar nach Zielangabe automatisch und selbstständig ermittelt und auf Wunsch vom Fahrer abgerufen oder auf einem Navigationsdisplay angezeigt. Auch dieses Verfahren funktioniert nur dann, wenn Parkplätze aufwendig verwaltet werden, um freie Parkplätze erkennen und in einer Navigationsvorrichtung des Kraftfahrzeugs anzeigen zu können.

DE 10 2012 201 472 A1 offenbart ein Verfahren zur Bereitstellung von Parkinformationen zu freien Parkplätzen in zumindest einem Straßenzug. Bei dem Verfahren werden Informationen über verfügbare, freie Parkplätze ermittelt, wobei aus den ermittelten Informationen eine Wissensdatenbasis mit historischen Daten erzeugt wird, wobei die historischen Daten für vorgegebene Straßenzüge und/oder vorgegebene Zeiten oder Zeiträume jeweils statistische Daten über freie Parkplätze umfassen. Aus den historischen Daten und aktuellen Informationen, welche zu einem ersten gegebenen Zeitpunkt für einen oder mehrere, ausgewählte Straßenzüge von im Verkehr befindlichen Fahrzeugen ermittelt werden, wird eine Wahrscheinlichkeitsverteilung zu erwartender freier Parkplätze für den oder die ausgewählten Straßenzüge ermittelt.

Der Erfindung liegt die Aufgabe zu Grunde, für einen Zielbereich um ein Reiseziel, in dem die Verfügbarkeit von Parkplätzen unbekannt ist, einem Fahrer eines Kraftfahrzeugs eine Aussage darüber zu liefern, wie zeitaufwändig die Suche nach einer Abstellmöglichkeit für sein Kraftfahrzeug voraussichtlich sein wird.

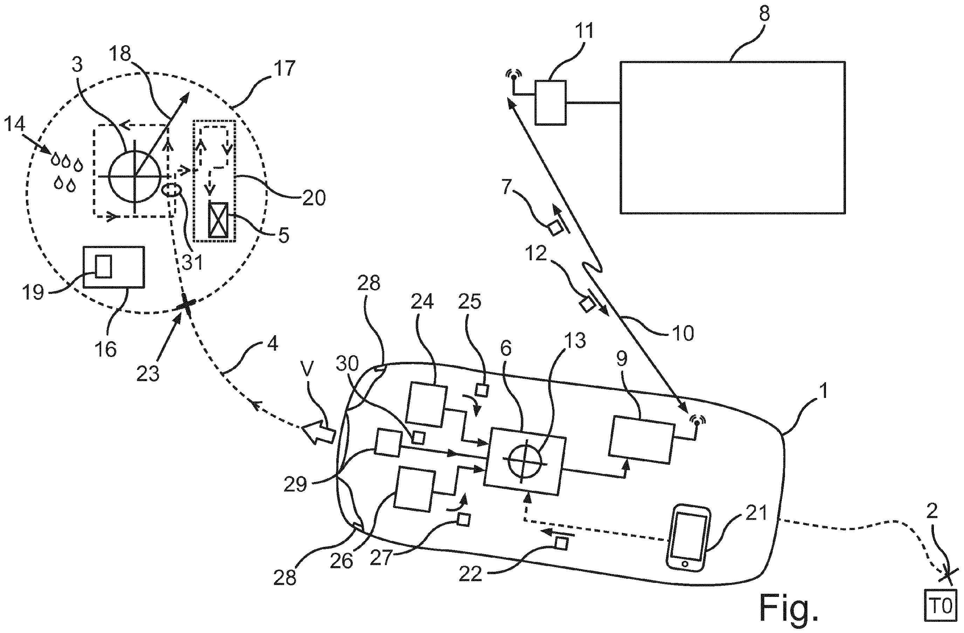

Die Aufgabe wird durch die Gegenstände der unabhängigen Patentansprüche gelöst. Vorteilhafte Weiterbildungen der Erfindung ergeben sich durch die Merkmale der abhängigen Patentansprüche, die folgende Beschreibung sowie die Figur.

Durch die Erfindung ist ein Verfahren zum Betreiben eines Kraftfahrzeugs bereitgestellt, um eine Reise zu einem Reiseziel zu unterstützen. Gemäß dem Verfahren wird durch eine Detektionsvorrichtung auf der Grundlage von Sensordaten des Kraftfahrzeugs und/oder auf der Grundlage von Zustandsdaten zumindest einer Fahrzeugkomponente des Kraftfahrzeugs, beispielsweise eines Blinkers, lokal im Kraftfahrzeug ermittelt, ob sich das Kraftfahrzeug in einer Suchphase befindet. Die Suchphase ist dadurch definiert, dass der Fahrer nicht mehr das Reiseziel anfährt, sondern eine Suche nach einer Parkgelegenheit für das Kraftfahrzeug durchführt. Durch die Detektionsvorrichtung wird eine Dauer der Suchphase ermittelt oder gemessen. Die Suchphase endet mit dem Abstellen des Kraftfahrzeugs, also mit einer Parkphase.

Gemäß der Erfindung werden beim Ermitteln der Suchdauer durch die Detektionsvorrichtung anhand zumindest einer Umweltsensoreinrichtung des Kraftfahrzeugs Umweltsensordaten ermittelt. Diese Umweltsensordaten beschreiben zumindest eine Umweltbedingung oder Umgebungsbedingung, welche während der Suche am Reiseziel vorliegt. Die Umweltsensordaten werden zusammen mit der ermittelten Suchdauer an eine fahrzeugexterne Servervorrichtung signalisiert. Dabei werden in der Servervorrichtung die Suchdauer zusammen mit Suchdauerangaben weiterer Kraftfahrzeuge gesammelt und dahingehend analysiert, dass sie im Zusammenhang mit der Tageszeit und dem Wochentag und der Wetterkondition unterschieden werden.

Dadurch werden statistische Abschätzungen erzeugt, die eine statistisch zu erwartende, voraussichtliche Suchdauer nach der Parkgelegenheit in einem Zielbereich, in welchem das Reiseziel liegt, angeben und die von der Tageszeit und dem Wochentag und der Wetterkondition abhängig sind. Dabei werde diese Abschätzungen als Zeitdaten abhängig vom jeweiligen Zielort ermittelt.

Als Umweltsensordaten können beispielsweise Wetterdaten ermittelt werden, die z.B. angeben, ob es am Reiseziel regnet und/oder welche Windstärke vorherrscht. Durch die Umweltsensordaten kann auch angegeben sein, zu welcher Uhrzeit die Suche stattfand. Hierdurch wird in vorteilhafter Weise berücksichtigt, dass sich das Parkverhalten anderer Fahrzeugnutzer in Abhängigkeit von Umgebungsbedingungen ändert. Bei Regen benutzen mehr Personen das Kraftfahrzeug anstelle von beispielsweise öffentlichen Verkehrsmitteln, sodass entsprechend an einem Reiseziel mehr Parkgelegenheiten besetzt sein können.

Durch die Erfindung ergibt sich der Vorteil, dass zu dem Reiseziel und/oder für einen Zielbereich um das Reiseziel herum mittels der Detektionsvorrichtung ermittelt wird, wie lange eine Suche nach einer Parkgelegenheit gedauert hat. Dieses Verfahren kann vielfach mittels desselben Kraftfahrzeugs und/oder mittels einer Vielzahl von Kraftfahrzeugen durchgeführt werden, sodass für das Reiseziel oder für mehrere Reiseziele eine statistische Auswertung für die Dauer von Suchphasen erzeugt werden kann. Es kann also zu einem Reiseziel oder zu einem Zielbereich um ein Reiseziel herum eine zu erwartende oder mittlere Suchdauer, das heißt eine mittlere Dauer der Suchphase, ermittelt werden. Man kann also beispielsweise jede ermittelte Suchdauer aus jedem Kraftfahrzeug zentral in einer fahrzeugexternen Servervorrichtung sammeln und dann bei Bedarf an ein Kraftfahrzeug diejenige mittlere Suchdauer mitteilen, die zu einem Reiseziel bekannt ist, zu welchem dieses Kraftfahrzeug hin navigiert werden soll oder in dessen Nähe es sich befindet.

Das Verfahren der Ermittlung der Suchdauer ist dabei selbst unabhängig von einer Funkverbindung zu einer zentralen Servervorrichtung. Vielmehr findet das Ermitteln der Suchdauer innerhalb des Kraftfahrzeugs durch die Detektionsvorrichtung statt. Hierdurch ergibt sich als zusätzlicher Vorteil, dass Sensordaten und Zustandsdaten genutzt werden können, deren Übertragung die Bandbreite oder Übertragungsrate einer herkömmlichen Funkverbindung zwischen einem Kraftfahrzeug und einer zentralen Servervorrichtung überfordern würde. Zusätzlich dazu erlaubt die Verarbeitung der Daten im Kraftfahrzeug (Detektion der Parkplatzsuche) die Integration von Datenschutzmethoden, wie zum Beispiel die Angabe der benötigten Zeit pro Städteviertel oder geographischem Gebiet oder Straße oder Straßenabschnitt oder einem Zeitfenster, ohne eine vollständige Positionskette zu übertragen. Die genannten Parameter können von einem fahrzeugexternen Server in Echtzeit vorgegeben werden, so dass die im Server verfügbare Ortsauflösung variiert oder eingestellt werden kann.

Die Erfindung umfasst auch optionale Weiterbildungen, durch deren Merkmale sich zusätzliche Vorteile ergeben.

Gemäß einer Weiterbildung ist zum Ermitteln der Suchdauer das Reiseziel in der Detektionsvorrichtung bekannt oder gespeichert. Beispielsweise kann es von dem Fahrer vor oder während der Fahrt eingegeben oder festgelegt worden sein, z.B. als Navigationsziel für eine Navigationsassistenz. Durch die Detektionsvorrichtung wird der Beginn der Suchphase in Abhängigkeit von einem Abstand des Kraftfahrzeugs zu dem Reiseziel erkannt. Als Sensordaten zum Erkennen der aktuellen Position des Kraftfahrzeugs können beispielsweise Positionsdaten eines Empfängers für ein Signal eines GNSS (global navigation satellite system), beispielsweise eines GPS (global positioning system) genutzt werden. Durch Definieren des Abstands oder Radius wird eine Region oder ein Zielbereich um das Reiseziel definiert, innerhalb welchem davon ausgegangen werden kann, dass der Fahrer sich nach einem Parkplatz umsieht. Der Abstand oder Radius kann dabei in Abhängigkeit von der Gesamtlänge der Fahrstrecke festgelegt oder definiert sein. Die Gesamtlänge ergibt sich als Abstand oder als Fahrstrecke zwischen einem Reisestartpunkt und dem Reiseziel.

Gemäß einer Weiterbildung wird zum Ermitteln der Suchdauer durch die Detektionsvorrichtung die Suchphase anhand zumindest eines vorbestimmten Musters eines Fahrverhaltens des Fahrers erkannt. Beispielsweise können hierzu als die besagten Sensordaten die Position und/oder Fahrtrajektorie des Kraftfahrzeugs und/oder die Fahrgeschwindigkeit des Kraftfahrzeugs und/oder als die besagten Zustandsdaten die Aktivität eines Blinkers und/oder ein Lenkwinkel eines Lenkrads als jeweiliger Zeitverlauf oder jeweilige Zeitreihe ermittelt und mit zumindest einem vorbestimmten Muster eines Fahrverhaltens vergleichen werden. Hieran kann erkannt werden, ob der Fahrer das Kraftfahrzeug weiterhin zu einem entfernten, gleich bleibenden Reiseziel, das heißt einem Zielpunkt, navigiert, oder ob die Fahrroute von dem Reiseziel abweicht, weil der Fahrer sich auf der Suche nach der Parkgelegenheit befindet. Die beschriebene Auswertung der Sensordaten und/oder Zustandsdaten kann auch im Nachhinein erfolgen, wenn das Kraftfahrzeug geparkt und/oder abgestellt oder ausgeschaltet worden ist. Hierzu kann beispielsweise ein Ringpuffer oder Ringspeicher vorgesehen sein, in welchem die Zeitreihen aus Sensordaten und/oder Zustandsdaten gespeichert werden, um nach erkanntem Beginn einer Parkphase in einer Rückschau nachträglich den Beginn einer Suchphase zu ermitteln und hieraus dann die Suchdauer zu bestimmen. Anhand von Sensordaten und/oder Zustandsdaten kann auch eine wiederholte Fährte, das heißt ein Fahren mit wiederholtem Passieren einer bestimmten Stelle und/oder die Straßenwahl und/oder die relative Fahrgeschwindigkeit zum umliegenden Fahrzeugverkehr erkannt werden. Mit Straßenwahl ist hierbei gemeint, dass erkannt wird, ob ein Fahrer eine Straßenkategorie wählt, beispielsweise eine Bundesstraße oder eine Zufahrtsstraße, die sinnvoll ist für das Anfahren des Reiseziels. Fährt der Fahrer durch eine geringere Straßenkategorie, als nötig, beispielsweise durch eine Anwohnerstraße oder sogar in eine Einbahnstraße, so kann davon ausgegangen werden, dass nicht mehr das Reiseziel annavigiert wird, sondern die Suche nach einer Parkgelegenheit begonnen hat. Es ist gemäß einer Weiterbildung vorgesehen, dass es eine Komponente im Kraftfahrzeug mittels Machine-Learning den Start der Parkphase anhand eines Modells prädiziert oder detektiert. Das verwendete Modell wird auf Basis von vorgegangenen Parkvorgängen trainiert.

Die Erfindung umfasst auch Weiterbildungen, die das Unterstützen eines Fahrers betreffen, nachdem bereits ein Wert für eine durchschnittliche Suchdauer zu einem Reiseziel bekannt ist. Eine dieser Weiterbildungen sieht vor, dass aus einer fahrzeugexternen Servervorrichtung, beispielsweise einem Server des Internets, zu dem Zielbereich die Zeitdaten, welche eine statistisch zu erwartende, voraussichtliche Suchdauer nach der Parkgelegenheit in dem Zielbereich angeben, empfangen und in dem Kraftfahrzeug bereitgestellt werden. Der Fahrer kann sich somit darauf einstellen, wie lange er voraussichtlich (im statistischen Mittel) nach der Parkgelegenheit suchen wird. Dies kann dem Fahrer auch schon bei Auswahl des Reiseziels oder Eingabe desselben angezeigt werden, sodass der Fahrer bereits vor Beginn der Fahrt zu dem Reiseziel weiß, wie viel Zeit er zum Suchen der Parkgelegenheit einplanen muss. Die Prognose der erwartenden voraussichtlichen Suchdauer kann die beschriebenen Umgebungsbedingungen am Reiseziel, wie z.B. Wetter, Zeit und/oder Wochentag, berücksichtigen. Die Ausführungsform, welche das Übermitteln der Zeitdaten vorsieht, stellt eine von dem bisher beschriebenen Verfahren zur Ermittlung der Suchdauer unabhängige Erfindung dar.

Eine Weiterbildung betrifft die Möglichkeit, die Suchdauer auf ein Höchstmaß zu begrenzen. Bei dieser Weiterbildung wird eine Position eines kostenpflichtigen Parkplatzes in dem Zielbereich ermittelt und ein Zeitwert eines Zeitaufwandes zum Abstellen des Kraftfahrzeugs auf dem kostenpflichtigen Parkplatz und zum Überwechseln von dem Parkplatz zu dem Reiseziel ermittelt. Mit Überwechseln ist hierbei gemeint, dass berücksichtigt wird, dass der Fahrer nach Abstellen des Kraftfahrzeugs auf dem kostenpflichtigen Parkplatz noch zu Fuß und/oder mit öffentlichen Verkehrsmitteln von dem Parkplatz zu dem eigentlichen Reiseziel reisen muss. Das Überwechseln ist also das Weiterreisen ohne das Kraftfahrzeug. In dem Kraftfahrzeug wird der ermittelte Zeitaufwand ausgegeben. Ein kostenpflichtiger Parkplatz kann beispielsweise in einem Parkhaus und/oder auf einem Parkplatz bereitgestellt sein. Durch diese Weiterbildung ergibt sich also die Option, dem Fahrer darzustellen oder anzubieten, dass er auch in ein Parkhaus oder auf einen Parkplatz ausweichen kann, wobei ihm dann auch die Dauer für den Fußweg oder allgemein für das Überwechseln bekannt ist. Falls dem Fahrer also die wahrscheinliche Suchdauer zu lang ist oder er nach der Suchdauer immer noch keine Parkgelegenheit gefunden hat, kann er auf den kostenpflichtigen Parkplatz ausweichen und damit sicherstellen, dass er mit Sicherheit lediglich den ermittelten Zeitaufwand an Zeit benötigt.

Besonders bevorzugt ist hierbei, dass ein Kostenaufwand für das Parken des Kraftfahrzeugs auf dem kostenpflichtigen Parkplatz ermittelt und dem Fahrer ausgegeben wird. Dem Fahrer wird somit eine Entscheidungsmöglichkeit gegeben, ob er die Kosten aufwenden möchte oder die ermittelte mittlere Suchdauer zum Suchen des Parkplatzes aufwenden möchte. Der Kostenaufwand kann beispielsweise durch Signalisieren eines Parkwunsches an einen Server zum Verwalten des kostenpflichtigen Parkplatzes und anschließendes Empfangen einer Kosteninformation aus diesem Server ermittelt werden.

Falls dem Fahrer die zu erwartende mittlere Suchdauer bei der Suche nach der Parkgelegenheit mitgeteilt wird, ist der Fahrer natürlich nicht sicher, ob er tatsächlich nur die voraussichtliche Suchdauer benötigen wird, da es sich hierbei um einen statistischen Mittelwert handelt. Um im vorteilhafter Weise die Wahrscheinlichkeit zu erhöhen, dass er innerhalb der Suchdauer fündig wird, sieht eine Weiterbildung vor, dass innerhalb des besagten Zielbereichs um das Reiseziel herum ein solcher Teilbereich ermittelt wird, für welchen sich die geringste voraussichtliche Suchdauer ergibt. Es wird also nicht beispielsweise in einem vorbestimmten Radius um das Reiseziel einheitlich ein einziger Zeitdauerwert für die Suchdauer ermittelt, sondern für unterschiedliche Teilbereiche in dem Zielbereich jeweils ein eigener Zeitdauerwert für die Suchdauer bereitgestellt. In dem Kraftfahrzeug wird dann ein Navigationshinweis, der zu dem Teilbereich mit der geringen voraussichtlichen Suchdauer führt, ausgegeben. Der Fahrer erhält somit eine Empfehlung, welcher Teilbereich, also beispielsweise welche Straße oder welcher Straßenzug, am wahrscheinlichsten eine freie Parkgelegenheit aufweist. Somit kann das Kraftfahrzeug gezielt zu dem statistisch günstigsten Teilbereich geführt werden. Eine Weiterbildung sieht vor, für die Ermittlung des Teilbereichs der geringsten voraussichtlichen Suchdauer die besagten Umgebungsbedingungen, wie z.B. Wetter, Zeit und/oder Wochentag, zu berücksichtigen

Eine Weiterbildung stellt sicher, dass die ermittelte zu erwartende Suchdauer, die aus der fahrzeugexternen Servervorrichtung empfangen worden ist, auch schon bei der Planung der Fahrt berücksichtigt werden kann. Bei dieser Weiterbildung werden durch die Detektionsvorrichtung Termindaten oder Kalenderdaten empfangen, wie sie beispielsweise aus einem Smartphone oder einem anderen portable, mobilen Endgerät oder aus einem Online-Kalender aus dem Internet abgefragt oder angefordert werden können. Anhand der Kalenderdaten wird eine notwendige Ankunftszeit an dem Reiseziel ermittelt. Beispielsweise können die Kalenderdaten also angeben, wann die Ankunft an einem vorbestimmten Reiseziel geplant ist. Anhand der Ankunftszeit wird dann durch die Detektionsvorrichtung ermittelt, wann die Fahrt beginnen muss. Hierzu wird anhand der geplanten Ankunftszeit, einer voraussichtlichen Fahrzeit von einem vorgegebenen Reisestartpunkt zu dem Zielbereich, in welchem das Reiseziel liegt, und anhand der Zeitdaten für die voraussichtliche Suchdauer nach der Parkgelegenheit in dem Zielbereich ein Abfahrtszeitpunkt für den Beginn der Fahrt ermittelt. Wenn der Fahrer dann über den Abfahrtszeitpunkt informiert ist, kann er sicher sein, das er innerhalb der sich ergebenden Fahrzeit nicht nur zum Reiseziel gelangt, sondern dort auch noch Zeit für die Suche nach der Parkgelegenheit hat und dennoch pünktlich zu dem Termin gemäß den Kalenderdaten eintrifft.

Das erfindungsgemäße Verfahren realisiert in der beschriebenen Weise die Erkennung der Suchphase innerhalb des Kraftfahrzeugs und ist somit durch eine fahrzeugeigene Komponente durchführbar.

Entsprechend umfasst die Erfindung auch eine Detektionsvorrichtung für ein Kraftfahrzeug, die in einem Kraftfahrzeug eingebaut oder bereitgestellt werden kann. Die erfindungsgemäße Detektionsvorrichtung ist dazu eingerichtet, die die Detektionsvorrichtung betreffenden Schritte einer Ausführungsform des erfindungsgemäßen Verfahrens durchzuführen. Die Detektionsvorrichtung kann beispielsweise als ein Programmmodul eines Infotainmentsystems (Informations-Unterhaltungssystem) oder eines Navigationssystems eines Kraftfahrzeugs ausgestaltet sein. Die Detektionsvorrichtung kann auch durch ein portables, mobiles Endgerät realisiert sein. Hierzu ist dann ein entsprechendes Programmmodul zum Durchführen der erfindungsgemäßen Schritte durch eine Prozessoreinrichtung des Endgeräts vorgesehen, wobei das Programmmodul beispielsweise als so genannte Applikation (App) ausgestaltet sein kann.

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs auf einer Fahrt zu einem Reiseziel.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 1, bei dem es sich beispielsweise um einen Kraftwagen, insbesondere einen Personenkraftwagen, handeln kann. Das Kraftfahrzeug 1 befindet sich in dem Beispiel auf einer Fahrt von einem Reisestartpunkt 2 zu einem Navigationsziel 3. Das Navigationsziel stellt hier ein Reiseziel dar. In abstrahierter Form ist in der Figur eine bisher zurückgelegte sowie eine zukünftige Fahrtrajektorie oder Fährte 4 des Kraftfahrzeugs 1 dargestellt. An dem Navigationsziel 3 benötigt ein Fahrer des Kraftfahrzeugs 1 eine Parkgelegenheit 5, um das Kraftfahrzeug 1 dort abstellen oder parken zu können. Erst dann kann der Fahrer zu seinem eigentlichen Navigationsziel 3, beispielsweise einem Gebäude oder einer Veranstaltung, gehen.

Bei dem Kraftfahrzeug 1 kann hierbei sowohl eine Suchdauer ermittelt werden, die der Fahrer benötigt, um die Parkgelegenheit 5 zu finden, als auch dem Fahrer eine Information darüber bereitgestellt werden, wie lange die Suche voraussichtlich oder im statistischen Mittel dauern wird.

Hierzu weist das Kraftfahrzeug 1 eine Navigationsvorrichtung 6 auf, bei der es sich beispielsweise um ein in das Kraftfahrzeug 1 eingebautes Navigationsgerät, beispielsweise ein Modul eines Infotainmentsystems des Kraftfahrzeugs 1, handeln kann. Die Navigationsvorrichtung 6 stellt eine Detektionsvorrichtung dar. Durch die Navigationsvorrichtung 6 wird unterschieden, ob sich das Kraftfahrzeug 1 in einer Anfahrtsphase befindet, während welcher das Kraftfahrzeug 1 durch den Fahrer zu dem Navigationsziel 3 geführt wird, oder in einer Suchphase, während welcher der Fahrer das Navigationsziel 3 schon erreicht hat, er aber noch die Suche nach der Parkgelegenheit 5 mit dem Kraftfahrzeug 1 durchführt.

Die Navigationsvorrichtung 6 kann dann eine Suchdauer 7 der Suchphase messen oder ermitteln und an eine zentrale Servervorrichtung 8 übermitteln. Die zentrale Servervorrichtung 8 kann beispielsweise durch einen Server des Internets realisiert sein. Für eine Übertragung der Suchdauer 7 kann das Kraftfahrzeug 1 eine Kommunikationseinrichtung 9 aufweisen, beispielsweise ein Mobilfunkmodul oder ein WLAN-Modul (WLAN - wireless local area network). Durch das Kommunikationsmodul 9 kann eine Funkverbindung 10 zu einer fahrzeugexternen Kommunikationseinrichtung 11, beispielsweise einen WLAN-Router oder ein Mobilfunknetz, bereitgestellt werden, über welche die Suchdauer 7 an die Servervorrichtung 8 signalisiert werden kann.

Aus der Servervorrichtung 8 kann die Navigationsvorrichtung 6 anders herum auch Zeitdaten 12 empfangen, welche die voraussichtliche Suchdauer angeben, wie sie durch die Servervorrichtung 8 beispielsweise auf der Grundlage von Zeitdaten vorangegangener Suchen anderer Kraftfahrzeuge ermittelt worden sein kann.

Für die Fahrt zu dem Navigationsziel 3 kann der Fahrer das Navigationsziel 3 beispielsweise als Navigationsvorgabe 13 in der Navigationsvorrichtung 6 festgelegt haben. Dann ist das Navigationsziel 3 in der Navigationsvorrichtung 6 bekannt. Die Navigationsvorrichtung 6 kann nun beispielsweise eine voraussichtliche Ankunftszeit (TOF - time of arrival) auf der Grundlage der Zeitdaten 12 anpassen und den Fahrer nicht nur darüber informieren, wann er mit dem Kraftfahrzeug 1 voraussichtlich das Navigationsziel 3 erreichen wird, sondern wann er insgesamt auch die Suche nach der Parkgelegenheit 5 abgeschlossen haben wird. Die Navigationsvorrichtung 6 plant also den Puffer für das Parken abhängig vom Zielort ein. Zusätzlich kann auch beispielsweise ein Wetter 14 im Bereich des Navigationsziels 3 und/oder eine Uhrzeit, zu welcher die Suche nach der Parkgelegenheit 5 stattfinden wird, berücksichtigt werden. Entsprechend können die Zeitdaten 12 durch die Servervorrichtung 8 kategorisiert nach Wetter und/oder Ankunftszeitraum sowie natürlich nach Zielort getrennt bereitgestellt werden.

Der Fahrer erhält hierdurch eine realistischere Abschätzung, wann er tatsächlich, physikalisch, am Navigationsziel 3 eintreffen wird und dort ohne sein Kraftfahrzeug agieren kann. Der Fahrer muss also, wenn er zum Beispiel einen Termin am Navigationsziel 3 hat, nicht selber einen Zeitpuffer für die Suche nach der Parkgelegenheit 5 einplanen, weil ihm bereits eine abgeschätzte Zeit für die Suche bereitgestellt wird. In der Navigationsvorrichtung 6 kann die abgeschätzte Zeit separat angegeben werden, zum Beispiel in einer Zeitleiste oder als separate Angabe, wie beispielsweise Zeit zum Ziel einerseits und Parkzeit andererseits.

Es kann auch eine Information über ein Parkhaus 15 oder über mehrere Parkhäuser oder Parkplätze in einem Zielbereich 17 um das Navigationsziel 3 herum mit einbezogen werden. Der Zielbereich 17 kann beispielsweise durch Vorgeben eines Abstands oder Radius 18 um das Navigationsziel 3 definiert sein. Der Radius 18 kann dabei abhängig von einer Gesamtlänge der Fahrstrecke vom Reisestartpunkt 2 zum Navigationsziel 3 festgelegt sein. In einem Parkhaus 16 kann ein kostenpflichtiger Parkplatz 19 verfügbar sein, sodass dem Fahrer des Kraftfahrzeugs 1 durch die Navigationsvorrichtung 6 die Option angeboten werden kann, ob er auf dem kostenpflichtigen Parkplatz 19 parken möchte, wodurch sich keine zusätzliche Suchdauer, sondern nur eine feste Zeitdauer für das Überwechseln vom Parkhaus 16 hin zum Navigationsziel 3 ergibt. Für einen Vergleich kann dem Fahrer durch die Navigationsvorrichtung 6 die wahrscheinliche Suchdauer anhand der Zeitdaten 12 für das eigene Suchen der Parkgelegenheit 5 ausgegeben werden. Der Fahrer kann dann entscheiden, welche der beiden Optionen für ihn günstiger ist. Hierbei können auch die Kosten für den kostenpflichtigen Parkplatz 19 durch die Navigationsvorrichtung 6 in der bereits beschriebenen Weise ermittelt werden.

Zusätzlich kann durch die Navigationsvorrichtung dem Fahrer eine Empfehlung gegeben werden, welcher Teilbereich 20 innerhalb des Zielbereichs 17 voraussichtlich die geringste Suchdauer erwarten lässt. Hierzu können dem Fahrer auch Navigationshinweise dahingehend gegeben werden, in welcher Straße es wahrscheinlich ist, eine Parkgelegenheit 5 zu finden.

Es können auch beispielsweise aus einem persönlichen portablen, mobilen Endgerät 22, beispielsweise einem Smartphone oder einem Tablet PC, oder aus einer Internetseite oder sogar aus der Navigationsvorrichtung selbst Kalenderdaten 22 verwendet werden, um hierdurch einen Abfahrtszeitpunkt T0 zu ermitteln, zu welchem die Fahrt am Reisestartpunkt 2 beginnen muss, damit der Fahrer für die Fahrt einschließlich der Suche nach der Parkgelegenheit 5 soviel Zeit hat, dass er rechtzeitig zu einem Termin, der durch die Kalenderdaten 22 definiert ist, am Navigationsziel 3 eintrifft.

Um die Suchdauer für die Parkplatzsuche nach der Parkgelegenheit 5 zu ermitteln, wird durch die Navigationsvorrichtung 6 erkannt, wann die Anfahrtsphase endet und die Suchphase beginnt. Das Ende der Suchphase ist natürlich mit dem Abstellen oder Ausschalten des Kraftfahrzeugs 1 auf der Parkgelegenheit 5 definiert. Als Beginn der Suchphase kann beispielsweise der Eintrittszeitpunkt 23 in den Zielbereich 17 oder ein erster Zeitpunkt des Passierens oder Erreichens des Navigationsziels 3 definiert werden. Dies kann anhand der Navigationsvorgabe 13 festgemacht werden. So kann also bei aktivierten Navigationssystem die Zeitdauer zwischen dem Erreichen des Zielbereichs 17 oder Navigationsziels 3 und dem Aussteigen des Fahrers aus dem Kraftfahrzeug als Suchdauer 7 ermittelt und an die Servervorrichtung 8 übertragen werden. Die Servervorrichtung 8 kann dann die Suchdauer 7 beim Aktualisieren der Zeitdaten 12 nutzten.

Bei nicht aktiviertem Navigationssystem, wenn also Navigationsvorgabe 13 vom Fahrer nicht eingegeben wurden, kann die Navigationsvorrichtung 6 auch eine zumindest eine Sensoreinrichtung 24 zum Ermitteln von Sensordaten 25 und/oder zumindest eine Fahrzeugkomponente 26 zum Ermitteln von Zustandsdaten 27 nutzen. Die Sensoreinrichtung 24 kann beispielsweise einen Empfänger für ein Signal eines GNSS umfassen, sodass die aktuelle Position des Kraftfahrzeugs 1 als Sensordaten 25 genutzt werden kann. Als eine Fahrzeugkomponente 26 kann beispielsweise ein Steuergerät für einen Fahrtrichtungsanzeiger oder Blinker 28 des Kraftfahrzeugs 1 genutzt werden, sodass die Fahrtrichtungsanzeige als Zustandsdaten 27 ausgewertet werden können. Als weitere Sensoreinrichtung 24 kann beispielsweise die Fahrgeschwindigkeitsmesseinrichtung genutzt werden, sodass als Sensordaten 25 die Fahrgeschwindigkeit V des Kraftfahrzeugs 1 ermittelt werden kann. Als weitere Sensoreinrichtung 24 kann auch eine Umfeldüberwachung des Kraftfahrzeugs 1 genutzt werden, sodass als Sensordaten 25 beispielsweise die Relativgeschwindigkeit des Kraftfahrzeugs 1 bezüglich des umgebenden Fahrzeugverkehrs ausgewertet werden kann. Wird das Fahrzeug im Vergleich zum Verkehrsfluss durch den Fahrer langsam geführt, so ist davon auszugehen, dass der Fahrer sich offenbar nach der Parkgelegenheit 5 umschaut. In dem Zielbereich 17 können auch beispielsweise durch eine Umfeldsensoreinrichtung 29 des Kraftfahrzeugs 1 Umweltsensordaten 30 erfasst werden, um beispielsweise das Wetter 14 im Zielbereich 17 zu ermitteln, und die Umweltsensordaten 30 zusammen mit der ermittelten Suchdauer 7 an die Servervorrichtung 8 übermittelt werden.

Bei nicht aktiviertem Navigationssystem, also unbekanntem Navigationsziel 3, kann also das Setzen eines Blinkers und/oder die Fahrt in niedriger Geschwindigkeit im Vergleich zu dem Verkehrsfluss rund um den Ausstiegspunkt an der Parkgelegenheit 5, die Fahrt über Straßen von niedriger Klasse rund um den Ausstiegspunkt an der Parkgelegenheit 5 und eine wiederholte Fährte 31 rund um den Ausstiegspunkt an der Parkgelegenheit 5 durch die Navigationsvorrichtung 6 auf Grundlage der Sensoreinrichtung 24 und/oder der Fahrzeugkomponente 25 erkannt werden, um den Beginn der Suchphase abzuschätzen. Die Zeitdauer wird dann nachträglich nach Abschluss des Parkmanövers abgeschätzt.

Die Zeitdauer wird dann zusammen mit weiteren Zeitdauerangaben weiterer Kraftfahrzeuge in der Servervorrichtung 8 gesammelt, dahingehend analysiert, dass sie im Zusammenhang mit der Tageszeit, dem Wochentag und/oder der Wetterkondition unterschieden wird. So werden statistische Abschätzungen erzeugt, die Abhängig von diesen unterschiedlichen Faktoren sind. Diese Abschätzungen werden als Zeitdaten 12 abhängig vom Zielort ermittelt und gegebenenfalls aktualisiert. So wird durch die Navigationsvorrichtung 6 anhand der Zeitdaten 12 die bei der Navigation angegebene "Time of Arrival", also die Ankunftszeit entsprechend angepasst.

Insgesamt zeigt das Beispiel, wie durch die Erfindung eine Parkplatzsuchzeit in die Navigation eingebunden werden kann.

## Patentansprüche

1. Verfahren zum Betreiben eines Kraftfahrzeugs (1) für eine Reise zu einem Reiseziel (3), wobei durch eine Detektionsvorrichtung (6) auf der Grundlage von Sensordaten (25) des Kraftfahrzeugs (1) und/oder auf der Grundlage von Zustandsdaten (27) zumindest einer Fahrzeugkomponente (26) des Kraftfahrzeugs (1) lokal im Kraftfahrzeug (1) ermittelt wird, ob sich das Kraftfahrzeug (1) in einer Suchphase, während welcher ein Fahrer des Kraftfahrzeugs (1) nicht mehr das Reiseziel (3) anfährt, sondern eine Suche nach einer Parkgelegenheit (5) für das Kraftfahrzeug (1) durchführt, befindet, und durch die Detektionsvorrichtung (6) eine Suchdauer (7) ermittelt wird,
**dadurch gekennzeichnet, dass**
beim Ermitteln der Suchdauer durch die Detektionsvorrichtung (6) anhand von zumindest einer Umweltsensoreinrichtung (29) des Kraftfahrzeugs (1) auch Umweltsensordaten (30), welche zumindest eine Umgebungsbedingung (14) beschreiben, welche während der Suche am Reiseziel (3) vorliegt, ermittelt werden, wobei die Umweltsensordaten (30) Wetterdaten und die Uhrzeit enthalten, und
die Umweltsensordaten (30) zusammen mit der ermittelten Suchdauer (7) an eine fahrzeugexterne Servervorrichtung (8) signalisiert werden, wobei
in der Servervorrichtung (8) die Suchdauer (7) zusammen mit Suchdauerangaben weiterer Kraftfahrzeuge gesammelt und dahingehend analysiert werden, dass sie im Zusammenhang mit der Tageszeit und dem Wochentag und der Wetterkondition unterschieden werden, und so statistische Abschätzungen erzeugt werden, die eine statistisch zu erwartende, voraussichtliche Suchdauer nach der Parkgelegenheit (5) in einem Zielbereich (17), in welchem das Reiseziel (3) liegt, angeben und die von der Tageszeit und dem Wochentag und der Wetterkondition abhängig sind, wobei diese Abschätzungen als Zeitdaten (12) abhängig vom jeweiligen Zielort ermittelt werden.

2. Verfahren nach Anspruch 1, wobei zum Ermitteln der Suchdauer (7) das Reiseziel (3) in der Detektionsvorrichtung (6) gespeichert ist und durch die Detektionsvorrichtung (6) ein Beginn der Suchphase in Abhängigkeit von einem Abstand (18) des Kraftfahrzeugs (1) zu dem Reiseziel (3) erkannt wird.

3. Verfahren nach einem der vorhergehenden Ansprüche, wobei zum Ermitteln der Suchdauer durch die Detektionsvorrichtung (6) die Suchphase anhand zumindest eines vorbestimmten Musters eines Fahrverhalten des Fahrers erkannt wird.

4. Verfahren nach einem der vorhergehenden Ansprüche, wobei aus einer fahrzeugexternen Servervorrichtung (8) zu dem Zielbereich (17) die Zeitdaten (12), welche eine statistisch zu erwartende, voraussichtliche Suchdauer nach der Parkgelegenheit (5) in dem Zielbereich (17) angeben, empfangen und in dem Kraftfahrzeug (1) bereitgestellt werden.

5. Verfahren nach Anspruch 4, wobei eine Position eines kostenpflichtigen Parkplatzes (19) in dem Zielbereich (17) ermittelt wird und ein Zeitwert eines Zeitaufwandes zum Abstellen des Kraftfahrzeugs (1) auf dem kostenpflichtigen Parkplatz (19) und zum Überwechseln von dem Parkplatz (19) zu dem Reiseziel (3) ermittelt wird und in dem Kraftfahrzeug (1) der ermittelte Zeitaufwand ausgegeben wird.

6. Verfahren nach Anspruch 5, wobei ein Kostenaufwand für das Parken des Kraftfahrzeugs (1) auf dem kostenpflichtigen Parkplatz (19) ermittelt und dem Fahrer ausgegeben wird.

7. Verfahren nach einem der Ansprüche 4 bis 6, wobei innerhalb des Zielbereichs (17) ein solcher Teilbereich (20) ermittelt wird, für welchen sich die geringste voraussichtliche Suchdauer ergibt, und in dem Kraftfahrzeug (1) ein Navigationshinweis, der zu diesem Teilbereich (20) führt, ausgegeben wird.

8. Verfahren nach einem der Ansprüche 4 bis 7, wobei durch die Detektionsvorrichtung (6) Kalenderdaten (22) empfangen werden und anhand der Kalenderdaten (22) eine notwendige Ankunftszeit an dem Reiseziel (3) ermittelt wird und anhand der Ankunftszeit, einer voraussichtlichen Fahrzeit von einem vorgegebenen Reisestartpunkt (2) zu dem Zielbereich (17) und anhand der Zeitdaten (12) ein Abfahrtszeitpunkt (T0) für den Beginn der Fahrt ermittelt wird.

9. Detektionsvorrichtung (6) für ein Kraftfahrzeug (1), die dazu eingerichtet ist, die die Detektionsvorrichtung (6) betreffenden Schritte eines Verfahrens nach einem der vorhergehenden Ansprüche durchzuführen.

## Claims

1. Method for operating a motor vehicle (1) for a trip to a destination (3), wherein by means of a detection device (6) based on sensor data (25) of the motor vehicle (1) and/or on the basis of status data (27) of at least one vehicle component (26) of the motor vehicle (1) it is determined locally in the motor vehicle (1) whether the motor vehicle (1) is in a search phase, during which a driver of the motor vehicle (1) is no longer driving towards the destination (3) but is searching for a parking opportunity (5) for the motor vehicle (1), and by means of the detection device (6) a search duration (7) is determined,
**characterised in that**
when determining the search duration by means of the detection device (6) environmental sensor data (30) are also determined by means of at least one environmental sensor device (29) of the motor vehicle (1) which describe at least one environmental condition (14) which exists during the search at the destination (3), wherein the environment sensor data (30) include weather data and the time of day, and
the environmental sensor data (30) together with the determined search duration (7) are communicated to a vehicle-external server device (8),
wherein
in the server device (8) the search duration (7) and search duration data of other motor vehicles are collected and analysed such that they can be differentiated with regard to the time of day and the day of the week and the weather conditions and thus statistical estimates are produced which indicate a statistically expected estimated search duration for the parking opportunity (5) in a destination region (17) in which the destination (3) is located, and which are dependent on the time of day and the day of the week and the weather conditions, wherein said estimates are determined as time data (12) depending on the respective destination.

2. Method according to claim 1, wherein for determining the search duration (7) the destination (3) is saved in the detection device (6) and by means of the detection device (6) the beginning of the search phase is recognised depending on a distance (18) between the motor vehicle (1) and the destination (3).

3. Method according to any of the preceding claims, wherein for determining the search duration by means of the detection device (6) the search phase is recognised on the basis of at least one predetermined pattern of driving behaviour of the driver.

4. Method according to any of the preceding claims, wherein the time data (12), which indicate a statistically expected estimated search duration for a parking opportunity (5) in the destination region (17), are received from a vehicle-external server device (8) to the destination region (17) and are provided in the motor vehicle (1)

5. Method according to claim 4, wherein a position of a paid parking space (19) in the destination region (17) is determined and a time value of the time required for parking the motor vehicle (1) in the paid parking space (19) and for transferring from the parking space (19) to the destination (3) is determined and the determined time required is output in the motor vehicle (1).

6. Method according to claim 5, wherein the cost of parking the motor vehicle (1) in the paid parking space (19) is determined and output to the driver.

7. Method according to any of claims 4 to 6, wherein within the destination region (17) a partial region (20) is determined, such that a shortest expected search duration is obtained, and a navigation indication is output in the motor vehicle (1) that leads to the partial region (20).

8. Method according to any of claims 4 to 7, wherein by means of the detection device (6) calendar data (22) are received and by means of the calendar data (22) a required time of arrival at the destination (3) is determined and by means of the time of arrival an expected driving time from a predetermined trip starting point (2) to the destination region (17) is determined and by means of the time data (12) a time of departure (TO) for starting the trip is determined.

9. Detection device (6) for a motor vehicle (1) which is configured to perform the steps of a method relating to the detection device (6) according to any of the preceding claims.

## Revendications

1. Procédé pour faire fonctionner un véhicule automobile (1) pour un trajet vers une destination (3), dans lequel il est déterminé localement dans le véhicule automobile (1) par un dispositif de détection (6) sur la base de données de capteur (25) du véhicule automobile (1) et/ou sur la base de données d'état (27) d'au moins un composant de véhicule (26) du véhicule automobile (1), si le véhicule automobile (1) se trouve dans une phase de recherche, pendant laquelle un conducteur du véhicule automobile (1) ne s'approche plus de la destination (3), mais est à la recherche d'une possibilité de stationnement (5) pour le véhicule automobile (1), et une durée de recherche (7) est déterminée par le dispositif de détection (6),
**caractérisé en ce que**
des données de capteur d'environnement (30), lesquelles décrivent au moins une condition d'environnement (14), laquelle est présente au niveau de la destination (3) pendant la recherche, sont également déterminées lors de la détermination de la durée de recherche par le dispositif de détection (6) à l'aide d'au moins un dispositif de capteur d'environnement (29) du véhicule automobile (1), dans lequel les données de capteur d'environnement (30) incluent des données météorologiques et l'heure, et
les données de capteur d'environnement (30) sont signalées conjointement avec la durée de recherche (7) déterminée à un dispositif de serveur (8) externe au véhicule,
dans lequel
la durée de recherche (7) conjointement avec des indications de durée de recherche d'autres véhicules automobiles sont collectées et analysées dans le dispositif de serveur (8) de sorte à les distinguer en fonction de l'heure de la journée et du jour de la semaine et de la condition météorologique, et que des estimations statistiques sont ainsi générées, qui indiquent une durée de recherche prévisionnelle, à escompter statistiquement de la possibilité de stationnement (5) dans une zone de destination (17), dans laquelle se trouve la destination (3), et qui dépendent de l'heure de la journée et du jour de la semaine et de la condition météorologique, dans lequel ces estimations sont déterminées en tant que données de temps (12) en fonction du lieu de destination respectif.

2. Procédé selon la revendication 1, dans lequel pour la détermination de la durée de recherche (7), la destination (3) est enregistrée dans le dispositif de détection (6) et un début de la phase de recherche peut être détecté par le dispositif de détection (6) en fonction d'une distance (18) du véhicule automobile (1) par rapport à la destination (3).

3. Procédé selon l'une quelconque des revendications précédentes, dans lequel pour la détermination de la durée de recherche par le dispositif de détection (6), la phase de recherche est détectée à l'aide d'au moins un modèle prédéterminé d'un comportement de conduite du conducteur.

4. Procédé selon l'une quelconque des revendications précédentes, dans lequel les données de temps (12), lesquelles indiquent une durée de recherche prévisionnelle, à escompter statistiquement de la possibilité de stationnement (5) dans la zone de destination (17), sont reçues à partir d'un dispositif de serveur (8) externe au véhicule pour la zone de destination (17) et mises à disposition dans le véhicule automobile (1).

5. Procédé selon la revendication 4, dans lequel une position d'une place de parking payante (19) est déterminée dans la zone de destination (17) et une valeur de temps d'un temps nécessaire au stationnement du véhicule automobile (1) sur la place de parking payante (19) et du passage de la place de parking (19) à la destination (3) est déterminée et le temps nécessaire déterminé est indiqué dans le véhicule automobile (1).

6. Procédé selon la revendication 5, dans lequel un coût pour le stationnement du véhicule automobile (1) sur la place de parking payante (19) est déterminé et indiqué au conducteur.

7. Procédé selon l'une quelconque des revendications 4 à 6, dans lequel une zone partielle (20), pour laquelle il résulte la plus petite durée de temps prévisionnelle, et une instruction de navigation, qui conduit vers cette zone partielle (20), est émise dans le véhicule automobile (1), est déterminée à l'intérieur de la zone de destination (17).

8. Procédé selon l'une quelconque des revendications 4 à 7, dans lequel des données de calendrier (22) sont reçues par le dispositif de détection (6) et un temps d'arrivée nécessaire à la destination (3) est déterminé à l'aide des données de calendrier (22) et un moment de départ (TO) pour le début du trajet est déterminé à l'aide du temps d'arrivée, d'un temps de parcours prévisionnel d'un point de départ du trajet prédéfini (2) à la zone de destination (17) et à l'aide des données de temps (12).

9. Dispositif de détection (6) pour un véhicule automobile (1), qui est aménagé pour effectuer les étapes concernant le dispositif de détection (6) d'un procédé selon l'une quelconque des revendications précédentes.
